(19) Europäisches Patentamt
European Patent Office
Office européen des brevets

(11) **EP 0 693 241 B1**

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(51) Int Cl.6: **H04L 1/20**, H04B 7/26, H04L 25/03

(21) Anmeldenummer: **94911054.8**

(22) Anmeldetag: **19.03.1994**

(86) Internationale Anmeldenummer:
**PCT/DE94/00308**

(87) Internationale Veröffentlichungsnummer:
**WO 94/24799 (27.10.1994 Gazette 1994/24)**

(54) **ZUVERLÄSSIGKEITSGESTEUERTE DATENDETEKTION IN EMPFÄNGERN FÜR TDMA-MOBILFUNKSYSTEME**

RELIABILITY-CONTROLLED DATA RECEPTION IN RECEIVERS FOR TDMA MOBILE RADIO SYSTEMS

DETECTION DE DONNEES A FIABILITE COMMANDEE DANS DES RECEPTEURS POUR SYSTEMES RADIOTELEPHONIQUES MOBILES AMRT

(84) Benannte Vertragsstaaten:
FR

(30) Priorität: **08.04.1993 DE 4311604**

(43) Veröffentlichungstag der Anmeldung:
**24.01.1996 Patentblatt 1996/04**

(73) Patentinhaber: **ROBERT BOSCH GMBH**
**70442 Stuttgart (DE)**

(72) Erfinder: **HAGMANNS, Franz-Josef**
**D-71522 Backnang (DE)**

(56) Entgegenhaltungen:
**EP-A- 0 520 969          EP-A- 0 524 597**

- **Fifth European Signal Processing Conference, 18-21/9/1990, Barcelona, ES; Elsevier, Amsterdam, NL, 1990; Seiten 225-228, Morgül & Dzung: "New optimum recursive parameter estimation/detection using unreliable erasure declaring detectors"**

**Beschreibung**

**1. Hintergrund der Erfindung**

Die Erfindung bezieht sich auf das Problem der adaptiven Datendetektion in einem Mobilfunkempfänger. "Adaptiv" bedeutet, daß im Empfänger eine Einrichtung vorgesehen ist, die die zeitlichen Änderungen der eigenschaften des Mobilfunkkanals nachvollziehen kann. Solche Einrichtungen arbeiten meist nach dem LMS- (Least Mean Squares) (siehe z.B. [1]) oder dem RLS-(Recursive Least Squares.) (siehe Z.B. [2]) Algorithmus. Diese Algorithmen adaptieren die Eigenschaften des Übertragungskanals kontinuierlich mit der Zeit. Beispielsweise ist in Fifth European Signal Processing Conference, 18-21/9/1990, Barcelona, ES; Elsevier, Amsterdam, NL, 1990; Seiten 225-228, Morgül & Dzung: "New optimum recursive Parameter estimation/detection using unrelieable erasure declaring detectors" ein Kalman-Filter zur Adaption der Kanalstoßantwort in einem Mobilfunk-Empfänger beschrieben. Dabei wird der Kalman-Algorithmus nur auf die zu einem bestimmten Zeitpunkt vorliegende Kanalatoßantwort angewendet.

In der EP-A-0 524 597 ist ein iteratives Verfahren zur Verminderung von Intersymbol-Interferenzen beschrieben, bei dem der Wert empfangener Abtastswerte nach Passieren einer oder mehrerer Plausibilitätsschwellen festgesetzt wird. Mit Hilfe der jeweiligen Abweichungen der empfangenen Abtastwerte von den festgesetzten Werten werden die Intersymbol-Interferenzen unterdrückt.

In der EP-A- 520 969 ist ein Schätzverfahren für die Datendetektion angegeben, bei dem empfangene Abtastwerte eines Zeitschlitzes zunächst beginnend mit dem zuerst empfangenen Wert gespeichert und verarbeitet werden, und zwar bis über einen Fadingeinbruch hinaus; dann erfolgt eine weitere Bearbeitung beginnend mit dem zuletzt gespeicherten Abtastwert, um schätzwerte der gesendeten Daten zu erzeugen.

In dieser Patentanmeldung wird dargelegt, daß kontinuierlich adaptierende Algorithmen unter gewissen, für den Mobilfunk typischen, Bedingungen versagen. Der Grund dafür ist, daß die oben genannten Adaptionsalgorithmen als zeitvariante rekursive Filter erster Ordnung angesehen werden können. Ein prinzipiell besseres Verhalten zeigen Algorithmen höherer Ordnung, zwei mögliche Algorithmen, weden in [3] und [4] beschrieben. Voraussetzung für diese Algorithmen ist eine zuverlässigkeitsgesteuerte Datendetektion, d.h., in einem bestimmten Empfangssignalabschnitt werden die Datenbits nicht in kontinuierlicher Abfolge mit der Zeit, sondern, beginnend mit den zuverlässigsten Datenbits, in Richtung abnehmender zuverlässigkeit detektiert.

Bild 1 zeigt die Struktur von Daten, die in einem Mobilfunksystem burstweise übertragen werden.
Bild 2 ist ein Blockschaltbild der Übertragungsstrecke
Bild 3 stellt die Einteilung eines TDMA-Bursts in Sektoren dar.
Bild 4 zeigt einen Fading-Einbruch in einem TDMA-Burst.

**2 Beschreibung der Erfindung**

**2.1 Modell des Übertragungssystems**

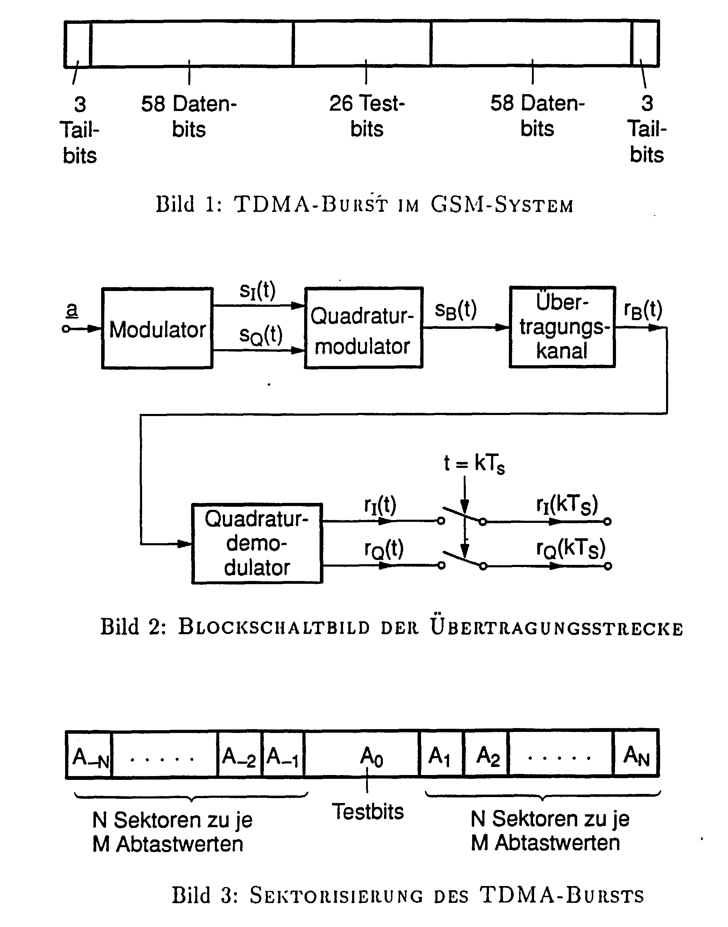

In digitalen TDMA-Mobilfunksystemen werden die Daten burstweise übertragen. Im GSM-System werden z. B. 116 Datenbits zu einem Burst zusammengefaßt. Die dazu gewählte Burststruktur ist im **Bild 1** dargestellt. Neben den 116 Datenbits, die in zwei Abschnitten zu je 58 Bits gruppiert sind, enthält der Burst noch an den Enden je 3 sogenannte "Tailbits" und in der Mitte eine sogenannte Testsequenz, bestehend aus 26 Bits, so daß der Burst aus insgesamt 148 Bits besteht.

Die Testsequenz dient zum "Ausmessen" des Übertragungskanals. Dieser läßt sich als lineares zeitvariantes Filter beschreiben [5], das Ausmessen des Übertragungskanals ist damit gleichbedeutend mit einer Schätzung der Kanalstoßantwort.

Ein Maß für die Änderungsgeschwindigkeit des Kanals ist die sogenannte Dopplerfrequenz

$$f_d = f0\frac{v}{c}.$$

Darin ist $f_0$ die Trägerfrequenz des gesendeten Signales, $v$ die Geschwindigkeit des mobilen Teilnehmers und $c$ die Lichtgeschwindigkeit. Die Länge eines Bursts ist so gewählt, daß, trotz der möglichen Änderungen, die Kanalstoßantwort während eines Bursts als nahezu konstant angesehen werden kann. Bei GSM gilt diese Annahme für Geschwindigkeiten $v$ bis etwa 250 km/h (die Trägerfrequenz $f_0$ liegt bei 900 MHz, die Burstdauer ist rund 546 μs).

Das erfindungsgemäße Verfahren setzt eine Burstübertragung ähnlich wie bei GSM voraus. Insbesondere ist das Vorhandensein einer Testsequenz in der Mitte des Bursts bedeutsam.

Die für die Definition der Signale wichtigen Teile von Sender und Empfänger sind im **Bild 2** dargestellt. Der Modulator bildet die zu übertragende Datensequenz _a_ in das Signal _s(t)_ ab. Es wird angenommen, daß _s(t)_ ein komplexwertiges Tiefpaßsignal mit den Quadraturkomponenten $s_I(t)$ und $s_Q(t)$ ist, d.h.

$$s(t) = s_I(t) + js_Q(t).$$

Dabei ist $j = \sqrt{-1}$ die imaginäre Einheit. Ferner wird angenommen, daß $W_s$ die Bandbreite des Signales ist. $s(t)$ kann daher nach dem Abtasttheorem eindeutig durch die Abtastwerte $s(kT_s)$ mit $T_s = 1/W_s$ repräsentiert werden. $s(t)$ wird durch den Quadraturmodulator in das HF-Signal

$$s_B(t) = \mathrm{Re}\left\{ s(t)e^{j2\pi f_0 t} \right\} = s_I(t)\cos 2\pi f_0 t - s_Q(t)\sin 2\pi f_0 t$$

abgebildet, wobei $f_0$ die gewünschte Trägerfrequenz ist. $s_B(t)$ wird gegebenenfalls weiter verstärkt und über die Antenne abgestrahlt.

$r_B(t)$ sei das HF-Empfangssignal, dem, wie $sB(t)$, gemäß

$$r_B(t) = \mathrm{Re}\left\{ r(t)e^{j2\pi f_0 t} \right\} = r_I(t)\cos 2\pi f_0 t - r_Q(t)\sin 2\pi f_0 t$$

ein komplexwertiges Tiefpaßsignal

$$r(t) = r_I(t) + j\tau_Q(t)$$

zugeordnet werden kann. Der Quadraturdemodulator auf Empfängerseite dient der Gewinnung dieses Signales. $r(t)$ ist wie $s(t)$ ein Tiefpaßsignal der Bandbreite $W_s$; $r(t)$ kann daher ebenfalls durch seine Abtastwerte $r(kT_s)$ repräsentiert werden.

Im Mobilfunk nimmt man an, daß zwischen den Empfangssignal- und Sendesignalabtastwerten die Beziehung

$$r(kT_s) = \sum_l h(l, kT_s)s((k-l)T_s) \; + \; n(kT_s)$$

besteht. Die Summe beschreibt eine zeitdiskrete Faltung; $h(l, kT_s)$ ist der $l$-te Koeffizient der (zeitvarianten) Kanalstoßantwort zum Zeitpunkt $t = kT_s$. $n(kT_s)$ symbolisiert eine zusätzliche Störkomponente; im Mobilfunk setzt diese sich gewöhnlich aus thermischem Rauschen und Signalen von Fremdsendern zusammen.

In den folgenden Betrachtungen wird die Zeitkonstante $T_s$ stets aus der Notation weggelassen; ferner wird angenommen, daß die Kanalstoßantwortkoeffizienten nur für $l = 0,...., L - 1$ von 0 verschieden sind. Die obige Beziehung zwischen Empfangssignal- und Sendesignalabtastwerten lautet dann

$$r(k) = \sum_{l=0}^{L-1} h(l, k)s(k-l) \; + \; n(k). \qquad (1)$$

Zur Vereinfachung der Notation werden die Kanalstoßantwortkoeffizienten zur Zeit $kT_s$ zu dem Vektor

$$\underline{h}(k) = (h(0, k),..., h(L - 1, k))^T$$

zusammengefaßt. Zur Notation: Vektoren werden durch einen Unterstrich gekennzeichnet. Der erste Summand in Gleichung (1) kann als Nutzanteil, der zweite als Störanteil des Empfangssignales bezeichnet werden.

## 2.2 Allgemeines Prinzip der Detektion

Zur Beschreibung des erfindungsgemäßen Verfahrens ist von Bedeutung, daß zur Ermittlung der gesendeten Daten die Kanalstoßantwort im Empfänger bekannt sein muß. Dies folgt unmittelbar aus Gleichung (1). Angenommen, das Rauschsignal wäre nicht vorhanden, d.h. $n(k) = 0$, dann wäre das Empfangssignal nur vom Sendesignal und der Kanalstoßantwort abhängig. Kennt man daher Empfangssignal und Kanalstoßantwort, dann kann man (1) nach dem Sendesignal auflösen und anschließend durch Inversion der Modulation die gesendeten Daten ermitteln. Umgekehrt gilt: kennt man die Daten, dann kann man (1) nach der Kanalstoßantwort auflösen. Ist $n(k) \neq 0$, dann kann man keine direkte Auflösung von (1) nach $s(k - l)$ oder $h(l,k)$ vornehmen; trotzdem gilt auch hier, daß zur Ermittlung des Sendesignales die Kanalstoßantwort bekannt sein muß und umgekehrt. Bedingt durch das nichtverschwindende Rauschen $n(k)$ sind die ermittelten Werte für die Daten bzw. der Kanalstoßantwort Schätzwerte.

Das allgemeine Prinzip der Detektion wird wie folgt beschrieben. Man teilt den empfangenen Burst in $2N + 1$ Sektoren $A_i$, $-N \leq i \leq +N$, ein, die nicht notwendigerweise die gleiche Länge haben müssen. Die Länge der Sektoren sei aber so gewählt, daß man eine Konstanz der Kanalstoßantwort innerhalb eines Sektors annehmen kann. Der Sektor Ao sei identisch mit der Testsequenz Eine solche Sektorisierung ist im **Bild 3** dargestellt.

Da die Testsequenz bekannt ist, kann für den Sektor Ao die Kanalstoßantwort bestimmt werden. Da sich die Kanalstoßantworten in benachbarten Sektoren nur wenig voneinander unterscheiden, können mit Hilfe des Kanalstoßantwortschätzwertes im Sektor $A_o$ die Daten der Sektoren $A_{-1}$ und $A_{+1}$ ermittelt werden. Mit diesen Daten können jetzt die Kanalstoßantworten dieser Sektoren geschätzt werden. Diese werden dann wiederum für die Daten-detektion der Sektoren $A_{-2}$ und $A_{+2}$ verwendet usw.

Die Schätzung der Kanalstoßantwort im Sektor $A_i$, $i > 0$, wird man nicht nur auf die in diesem Sektor detektierten Daten basieren, sondern auch z.B. auf die Kanalstoßantwort im Sektor $A_{i-1}$. Der Grund dafür ist, daß sich die Kanalstoßantworten von Sektor zu Sektor nur wenig ändern; die Kanalstoßantworten der einzelnen Sektoren sind stark miteinander korreliert.

Die Idee, die der Erfindung zugrunde liegt, besteht im wesentlichen aus der Erkenntnis, daß die Korrelationen der Kanalstoßantwortkoeffizienten möglichst weitgehend ausgenutzt werden sollen, d.h. bei der Ermittlung der Kanalstoßantwort für den Sektor $A_i$ sollen alle Kanalstoßantworten der bereits bearbeiteten Sektoren berücksichtigt werden. Dies ist aber nur dann sinnvoll, wenn die Kanalstoßantwortschätzwerte der bereits bearbeiteten Sektoren auch zuverlässig sind. Aus diesem Grund sollte die Bearbeitung des Bursts beginnen mit dem zuverlässigsten Sektor in Richtung abnehmender Zuverlässigkeit ausgeführt werden.

## 2.3 Vorbekannte Lösungen

Die bekanntesten Verfahren für die Kanalstoßantwortadaption sind der LMS- und der RLS-Algorithmus. In beiden Fällen bestehen die Sektoren außerhalb der Testsequenz aus nur je einem Signalabtastwert. $\hat{\underline{h}}(i)$ sei der Kanälstoßantwortschätzwert für den $i$-ten Sektor. Für $i > 0$ berechnen beide Algorithmen

$$\hat{\underline{h}}(i) = \hat{\underline{h}}(i-1) + \underline{P}(i)d(i). \tag{2}$$

Darin ist $\underline{P}(i)$ ein Vektor der gleichen Dimension wie $\hat{\underline{h}}(i)$ und

$$d(i) = r(i) - \hat{r}(i) \tag{3}$$

der Fehler zwischen dem tatsächlichen Empfangssignal $r(i)$ und der Empfangssignalnachbildung

$$\hat{r}(i) = \sum_{l=0}^{L-1} \hat{h}(l, i-1)s(i-l). \tag{4}$$

Gleichung (2) beschreibt, daß $\hat{\underline{h}}(i)$ nur von $\hat{\underline{h}}(i-1)$, also der geschätzten Kanalstoßantwort im vorangegangenen Sektor, abhängig ist. Die detektierten Daten werden zur Berechnung des Fehlers $d(i)$ benötigt.

Diese Betrachtungen gelten sowohl für den LMS- als auch für den RLS-Algorithmus. Der Unterschied zwischen beiden Algorithmen besteht in der Wahl von $\underline{P}(i)$. Da jeder neue Kanalstoßantwortschätzwert nach (2) nur von dem unmittelbar vorangegangen abhängt, kann man (in Analogie zur Theorie rekursiver zeitdiskreter Filter) von Algorithmen ersten Ordnung sprechen.

Die Zeitrichtung in der Adaptionsgleichung (2) kann umgedreht werden. Man erhält dann

$$\hat{\underline{h}}(i) = \hat{\underline{h}}(i+1) + \underline{P}(i)\,d(i). \tag{5}$$

Dies ist für die Bearbeitung der Sektoren $A_i$ mit $i < 0$ von Bedeutung.

Algorithmen erster Ordnung versagen unter zwei Bedingungen.

1. Ist der Schätzwert für die Kanalstoßantwort im Sektor $A_{i-1}$ völlig falsch, dann ist auch die Datendektion im Sektor $A_i$ fehlerhaft, da diese gerade mit der geschätzten Kanalstoßantwort des Sektors $A_{i-1}$ ausgeführt wird. Da der Schätzwert für die Kanalstoßantwort im Sektor $A_i$ nur von $\underline{\hat{h}}(i\text{-}1)$ und den Daten des Sektors $A_i$ abhängt, wird dieser auch vollkommen falsch sein. Eine Fehlschätzung der Kanalstoßantwort im Sektor $A_{i-1}$ führt daher mit hoher Wahrscheinlichkeit zu einer Fehlschätzung der Kanalstoßantwort im Sektor $A_i$.

2. Sind die Komponenten des Kanalstoßantwortvektors im Sektor $A_i$ so klein, daß der Nutzanteil des Empfangssignales klein gegenüber dem Störanteil ist, dann wird die Datendetektion in diesem Sektor mit hoher Wahrscheinlichkeit fehlerhaft sein. Aus den Gleichungen (2), (3) und (4) folgt dann, daß die Änderung der Kanalstoßantwort vom Sektor $A_{i-1}$ zum Sektor $A_i$ nicht nachvollziehbar ist; die geschätzte Änderung wird vielmehr völlig zufällig sein. Daraus und aus der geringen Größe der Komponenten von $\underline{h}(i)$ folgt, daß der Schätzwert $\underline{\hat{h}}(i)$ mit großer Wahrscheinlichkeit völlig falsch ist.

Aus diesen beiden Punkten folgt, daß die Algorithmen erster Ordnung eine Adaption durch einen Fading-Einbruch hindurch nicht erlauben. Unter einem Fading-Einbruch versteht man eine Situation, in der die Kanälstoßantwortkoeflizienten so kleine Werte annehmen, daß der Nutzanteil des Empfangssignales im Rauschen verschwindet. Angenommen, der Sektor $A_{i-1}$ wäre von einem Fading-Einbruch betroffen. Aus dem zweiten Punkt folgt nun, daß der Schätzwert für die Kanalstoßantwort im Sektor $A_i$ mit hoher Wahrscheinlichkeit stark fehlerbehaftet sein wird. Aus dem ersten Punkt folgt dann, daß dies auch für alle weiteren Sektoren $A_{i+1}$, $A_{i+2}$ usw. gilt.

Tritt ein Fading-Einbruch in einem Datenabschnitt auf, dann sind die Daten hinter (von der Testsquenz aus gesehen) diesem Fading-Einbruch nicht mehr detektierbar. Die Wahrscheinlichkeit eines solchen Fading-Einbruches steigt mit der Fahrzeuggeschwindigkeit. Dies ist der Grund warum Algorithmen erster Ordnung bei hohen Fahrzeuggeschwindigkeiten versagen. Im GSM-System gilt diese Aussage für Fahrzeuggeschwindigkeiten oberhalb etwa 250 km/h.

### 2.4 Zuverlässigkeitsgesteuerte Datendetektion gemäß der Erfindung

Die Möglichkeit zur Adaption der Kanalstoßantwort durch einen Fading-Einbruch hindurch ist Voraussetzung für eine zuverlässige Mobilkommunikation bei sehr hohen Fahrzeuggeschwindigkeiten. Anwendungsbeispiele hierfür sind schnellfährende Züge, für die Geschwindigkeiten bis zu 500 km/h diskutiert werden. Das GSM-System wurde zunächst für Fahrzeuggeschwindigkeiten bis etwa 250 km/h konzipiert. Eine Verwendung der GSM-Standards beim Bahnmobilfunk ist nur dann möglich, wenn die Methoden zur Kanalstoßantwortadaption und insbesondere ihre Fähigkeit zur Adaption der Kanalstoßantwort durch einen Fading-Einbruch hindurch signifikant verbessert werden können.

Eine signifikante Verbesserung der Kanalstoßantwortadaption ist nur durch Algorithmen höherer Ordnung möglich. Bei solchen Algorithmen ist der Schätzwert $\underline{\hat{h}}(i)$ nicht nur von $\underline{\hat{h}}(i-1)$ (bzw. $\underline{\hat{h}}(i+1)$ bei der Rückwärtsadaption) abhängig, sondern von möglichst vielen bereits ermittelten $\underline{\hat{h}}(i+n)$, $n \neq 0$. Dies ermöglicht ein verbessertes Ausnutzen der Korrelationen der Kanalstoßantworten zu unterschiedlichen Zeiten.

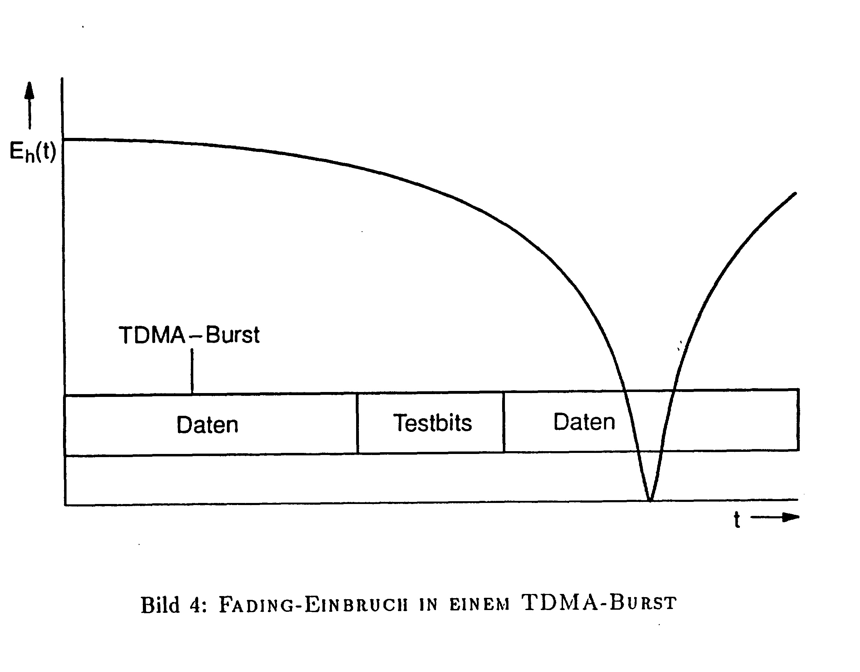

**Beispiel**: Gegeben sei die im **Bild 4** dargestellte Situation.

$$E_h(t) = \sum_{l=0}^{L-1} |h(l,t)|^2$$

ist die Energie der Kanalstoßantwort zur Zeit $t$. Etwa in der Mitte des zweiten Datenabschnittes ist ein Fading-Einbruch zu erkennen. Bei Verwendung eines Algorithmusses erster Ordnung, der nicht durch diesen Fading-Einbruch hindurch adaptieren kann, wären die Datenbits am Ende des zweiten Datenabschnittes nicht mehr detektierbar. Da die Kanalstoßantwortkoeffizienten zu beiden Seiten des Fading-Einbruches jedoch miteinander korreliert sind, ist es durchaus möglich, von den geschätzten Kanalstoßantworten zur linken Seite auf die zur rechten Seite des Fading-Einbruches zu schließen. Dazu sollte jedoch gewährleistet sein, daß der Kanalstoßantwortverlauf zur linken Seite des Fading-Einbruches vollständig bekannt ist, bevor der zur rechten Seite zu ermitteln versucht wird. Es ist also eine Einrichtung vorzusehen, die zunächst alle zuverlässigen Datenbereiche, d.h. Datenbereiche, die nicht von einem Fading-Einbruch betroffen sind, zur Detektion vorsieht bevor ein betroffener Bereich bearbeitet wird.

Zur zuverlässigkeitsgesteuerten Datendetektion sei die im Bild 3 dargestellte Sektorisierung des Bursts betrachtet. Es sei angenommen, daß jeder Sektor aus $M$ Signalabtastwerten besteht. Zunächst werden die Datenbits der Sektoren $A_{-1}$ und $A_{+1}$ detektiert. Zusätzlich wird zu jeder Datenbitentscheidung ein Maß für seine Zuverlässigkeit ermittelt. Sei $a(k)$ das k-te Datenbit und $\underline{r}$ der Vektor mit den Empfangssignalabtastwerten als Komponenten sowie $P(a(k) = \alpha|\underline{r})$ die Posterior-Wahrscheinlichkeit, daß das k-te gesendete Datenbit den Wert $\alpha$ hat, dann ist idealerweise

$$\lambda(k) = \left| \ln \frac{P(a(k) = 1|\underline{r})}{P(a(k) = 0|\underline{r})} \right|$$

als Zuverlässigkeitsmaß für die k-te Datenbitentscheidung zu verwenden. Verfahren, die diese Werte (zumindest näherungsweise) berechnen können, sind in der statistischen Nachrichtentheorie allgemein bekannt. $\Lambda_i$ sei die Summe aller Zuverlässigkeitsmaße im Sektor $A_i$. $\Lambda_i$ wird im folgenden "mit Zuverlässigkeit des Sektors $A_i$" bezeichnet. Nach der Bearbeitung von $A_{-1}$ und $A_{+1}$ wird das Detektionsergebnis des Sektors mit der kleineren Zuverlässigkeit wieder verworfen. Angenommen, dies wäre der Sektor $A_{+1}$. Übrig bleibt dann das Detektionsergebnis des Sektors $A_{-1}$. Im nächsten Schritt werden dann die Sektoren $A_{-2}$ und wieder $A_{+1}$ bearbeitet, ein Vergleich von $\Lambda_{-2}$ und $\Lambda_{+1}$ ausgeführt und wiederum der Sektor mit der kleineren Zuverlässigkeit verworfen usw. Die Neudetektion des verworfenen Sektors im folgenden Schritt macht nur dann einen Sinn, wenn mit dem ausgewählten Sektor eine Kanaladaption ausgeführt wurde, deren Ergebnis durch geeignete Extrapolation auf den verworfenen Sektor übertragen wird. Nur in diesem Fall kann die Neudetektion des verworfenen Sektors zu einem neuen Ergebnis führen. Wird eine solche Extrapolation nicht ausgeführt, dann wird der Sektor mit der kleineren Zuverlässigkeit nicht verworfen. Der Zuverlässigkeitsvergleich liefert dann nur die Information über die Richtung der weiteren Detektion. Im obigen Fall würde dann im zweiten Schritt nur der Sektor $A_{-2}$ detektiert und seine Zuverlässigkeit $\Lambda_{-2}$ mit $\Lambda_{+1}$ verglichen.

## Literatur

[1] B. Widrow, J.M. McCool, M.G. Larimore, C.R. Johnson, "Stationary and Nonstationary Learning Characteristics of the LMS Adaptive Filter", Proceedings of the IEEE, vol. 64, no. 8, pp. 1151-1162, 1976.

[2] E. Eleftheriou, D.D. Falconer, "Tracking Properties and Steady-State Performance of RLS Adaptive Filter Algorithms, IEE Transactions on Acoustic, Speech and Signal Processing, vol. ASSP-34, no. 5, pp. 1097-1110, 1986.

[3] F.J. Hagmanns, "Kalman-Filter zur Kanalstoßantwortadaption in Empfängern für TDMA-Mobilfunksysteme", Internationale Patentanmeldung WO 94/24798

[4] F.J. Hagmanns, "Geradeninterpolationsmethode zur Kanaletoßantwortadaption in Empfängern für TDMA-Mobilfunksysteme", Internationale Patentanmeldung WO 94/24796

[5] P.A. Bello, "Characterization of Randomly Time Variant Linear Channels", IEEE Transactions on Communications Systems vol. CS-11, pp. 360-393, 1963

## Patentansprüche

1.   Verfahren zur Datendetektion von TDMA-Datenbursts, die eine zentrale Testsequenz ($A_0$) aufweisen, durch Ermittlung der Kennparameter des Übertragungskanals, dadurch gekennzeichnet, das für jeweils einen Datenburst folgende Schritte durchgeführt werden:

   a) die beiden Datenabschnitte, zwischen denen die Testsequenz innerhalb des Datenbursts liegt, werden jeweils in N Sektoren unterteilt,

b) aus der Testsequenz wird die erste Kanalstoßantwort ermittelt,

c) mit Hilfe der ersten Kanalstoßantwort werden als Detektionsergebnisse die Daten der beiden Sektoren ($A_1$, $A_1$)ermittelt, die sich in Vor- bzw. Rückwärtsrichtung unmittelbar an die Testsequenz anschließen,

d) die zuverlässigkeit des zuletzt in vorwärtsrichtung ermittelten Detektionsergebnisses wird mit der Zuverlässigkeit des zuletzt in Rückwärtsrichtung ermittelten Detektionsergebnisses verglichen, das Weniger zuverlässige Detektionsergebnis wird verworfen und die weitere Detektionsrichtung wird auf diejenige Vor- bzw. Rückwärtsrichtung festgelegt, die der Richtung entspricht, in welcher - von der Testsequenz aus betrachtet - das zuverlässigere Detektionsergebnis liegt,

e) mit Hilfe des zuverlässigeren Detektionsergebnisses wird die zugehörige Kanalstoßantwort aktualisiert,

f) mit Hilfe der Kanalstoßantworten der bisher bearbeiteten Sektoren wird in der festgelegten Detektionsrichtung das Detektionsergebnis des folgenden Sektors ermittelt, und es wird in der entgegengesetzten Richtung anstelle des verworfenen Detektionsergebnisses ein neues Detektionsergebnis auf der Basis der Kanalstoßantworten der bisher bearbeiteten Sektoren ermittelt,

g) die Schritte d bis f werden solange wiederholt, bis die Daten aller Sektoren detektiert sind.

2. Verfahren zur Datendetektion von TDMA-Datenbursts, die eine zentrale Testsequenz ($A_0$) aufweisen, durch Ermittlung der Kennparameter des Übertragungskanals, dadurch gekennzeichnet, daß für jeweils einen Datenburst folgende Schritte durchgeführt werden:

a) die beiden Datenabschnitte, zwischen denen die Testsequenz innerhalb des Datenbursts liegt, werden jeweils in N Sektoren unterteilt,

b) aus der Testsequenz wird die erste Kanalstoßantwort ermittelt,

c) mit Hilfe der ersten Kanalstoßantwort werden als Detektionsergebnisse die Daten der beiden Sektoren ($A_1$, $A_1$)ermittelt, die sich in Vor- bzw. Rückwärtsrichtung unmittelbar an die Testsequenz anschließen,

d) die Zuverlässigkeit des zuletzt in Vorwärtsrichtung ermittelten Detektionsergebnisses wird mit der Zuverlässigkeit des zuletzt in Rückwartsrichtung ermittelten Detektionsergebnisses verglichen, und die weitere Detektionsrichtung wird auf diejenige Vor- bzw. Rückwärtsrichtung festgelegt, die der Richtung entspricht, in welcher - von der Testsequenz aus betrachtet - das zuverlässigere Detektionsergebnis liegt,

e) mit Hilfe des zuverlässigeren Detektionsergebnisses wird die zugehörige Kanalstoßantwort aktualisiert,

f) mit Hilfe der Kanalstoßantworten der bisher bearbeiteten Sektoren wird in der festgelegten Detektionsrichtung das Detektionsergebnis des folgenden Sektors ermittelt,

g) die Schritte d bis f werden solange wiederholt, bis in einer ersten Detektionsrichtung die Daten aller Sektoren detektiert sind,

h) die Detektion wird in der anderen Detektionsrichtung auch anhand von Kanalatoßantworten fortgesetzt, die in der ersten Detektionsrichtung ermittelt wurden.

## Claims

1. Method for data detection of TDMA data bursts, which have a central test sequence ($A_0$), by determining the identification parameters of the transmission channel, characterized in that the following steps are carried out for one data burst in each case:

   a) the two data segments between which the test sequence within the data burst is situated are respectively subdivided into N sectors,
   b) the first channel unit pulse response is determined from the test sequence,

c) with the aid of the first channel unit pulse response the data of the two sectors ($A_{-1}$, $A_1$) which immediately adjoin the test sequence in the forward and reverse directions, respectively, are determined as detection results,

d) the reliability of the detection result last determined in the forward direction is compared with the reliability of the detection result last determined in the reverse direction, the less reliable detection result is rejected and the further detection direction is fixed on that forward or reverse direction which corresponds to the direction in which - viewed from the test sequence - the more reliable detection result is situated,

e) the associated channel unit pulse response is updated with the aid of the more reliable detection result,

f) with the aid of the channel unit pulse responses of the previously processed sectors, the detection result of the following sector is determined in the fixed detection direction and instead of the rejected detection result a new detection result is detected in the opposite direction on the basis of the channel unit pulse responses of the previously processed sectors,

g) the steps d to f are repeated until the data of all the sectors are detected.

2. Method for data detection of TDMA data bursts, which have a central test sequence ($A_0$), by determining the identification parameters of the transmission channel, characterized in that the following steps are carried out for one data burst in each case:

a) the two data segments between which the test sequence within the data burst is situated are respectively subdivided into N sectors,

b) the first channel unit pulse response is determined from the test sequence,

c) with the aid of the first channel unit pulse response the data of the two sectors ($A_{-1}$, $A_1$) which immediately adjoin the test sequence in the forward and reverse directions, respectively, are determined as detection results,

d) the reliability of the detection result last determined in the forward direction is compared with the reliability of the detection result last detected in the reverse direction and the further detection direction is fixed on that forward or reverse direction which corresponds to the direction in which - viewed from the test sequence - the more reliable detection result is situated,

e) the associated channel unit pulse response is updated with the aid of the more reliable detection result,

f) with the aid of the channel unit pulse responses of the previously processed sectors, the detection result of the following sector is determined in the fixed detection direction,

g) the steps d to f are repeated until the data of all the sectors are detected in a first detection direction,

h) the detection is continued in the other detection direction also with the aid of channel unit pulse responses which have been determined in the first detection direction.

**Revendications**

1. Procédé de détection de données d'une salve de données AMRT ayant une séquence de test, centrale, ($A_0$), par détermination des paramètres caractéristiques du canal de transmission,
caractérisé en ce que
pour chaque salve de données, on effectue les étapes suivantes :

a) les deux segments de données entre lesquels se trouve la séquence de test à l'intérieur de la salve de données, sont subdivisés chacun en N secteurs,

b) à partir de la séquence de test on détermine la première réponse impulsionnelle de canal,

c) à l'aide de la première réponse impulsionnelle de canal, on détermine, comme résultat de détection, les données des deux secteurs ($A_{-1}$, $A_{+1}$), qui font directement suite à la séquence de test dans le sens avant et dans le sens arrière,

d) on compare la fiabilité du résultat de détection obtenu en dernier lieu dans la direction avant, à la fiabilité du résultat de la détection obtenu en dernier lieu dans la direction arrière, on rejette le résultat de détection le moins fiable et on fixe la suite de la direction de détection sur la direction avant ou arrière respective qui correspond à la direction dans laquelle se situe (considéré à partir de la séquence de test) le résultat de détection le plus fiable,

e) à l'aide du résultat de détection le plus fiable, on actualise la réponse impulsionnelle de canal correspondante,

f) à l'aide des réponses impulsionnelles de canal des secteurs traités jusqu'alors, on détermine dans la direction de détection fixée, le résultat de la détection du secteur suivant et, dans la direction opposée, à la place du résultat de détection rejeté, on détermine un nouveau résultat de détection sur la base des réponses impulsionnelles de canal des secteurs traités jusqu'alors,

g) on répète les étapes d-f jusqu'à ce que les données de tous les secteurs soient détectées.

**2.** Procédé de détection de données de salve de données AMRT, ayant une séquence de test centrale ($A_0$), en déterminant les paramètres caractéristiques du canal de transmission,

caractérisé en ce que,

pour chaque salve de données, on effectue les étapes suivantes :

a) on subdivise en N secteurs chacun des deux segments de données entre lesquels se trouve la séquence de test de la salve de données,

b) à partir de la séquence de test, on détermine la nouvelle réponse impulsionnelle de canal,

c) à l'aide de la première réponse impulsionnelle de canal, on détermine, comme résultat de détection, les données des deux secteurs ($A_{-1}$, $A_1$) qui font directement suite à la séquence de test dans le sens avant et dans le sens arrière,

d) On compare la fiabilité du résultat de détection déterminant, dans le sens avant, à la fiabilité du résultat de détection déterminé en dernier lieu dans le sens arrière, et on fixe l'autre direction de détection sur la direction avant ou arrière respective qui correspond à la direction dans laquelle se trouve le résultat de détection le plus fiable considéré à partir de la séquence de test,

e) à l'aide du résultat de détection le plus fiable, on actualise la réponse impulsionnelle de canal correspondante,

f) à l'aide des réponses impulsionnelles de canal des secteurs traités jusqu'alors, on détermine, dans la direction de détection fixée, le résultat de détection du secteur suivant,

g) on répète les étapes d-f jusqu'à ce que, dans une première direction de détection, on détecte les données de tous les secteurs,

h) on poursuit la détection dans la première direction de détection également à l'aide des réponses impulsionnelles qui ont été déterminées dans la première direction de détection.

| 3 Tail-bits | 58 Daten-bits | 26 Test-bits | 58 Daten-bits | 3 Tail-bits |

Bild 1: TDMA-BURST IM GSM-SYSTEM

$\underline{a}$ → Modulator → $s_I(t)$, $s_Q(t)$ → Quadratur-modulator → $s_B(t)$ → Über-tragungs-kanal → $r_B(t)$

Quadratur-demo-dulator → $r_I(t)$, $r_Q(t)$ → $t = kT_S$ → $r_I(kT_S)$, $r_Q(kT_S)$

Bild 2: BLOCKSCHALTBILD DER ÜBERTRAGUNGSSTRECKE

| $A_{-N}$ | . . . . . | $A_{-2}$ | $A_{-1}$ | $A_0$ | $A_1$ | $A_2$ | . . . . . | $A_N$ |

N Sektoren zu je M Abtastwerten     Testbits     N Sektoren zu je M Abtastwerten

Bild 3: SEKTORISIERUNG DES TDMA-BURSTS

10

Bild 4: Fading-Einbruch in einem TDMA-Burst